(19) Europäisches Patentamt
European Patent Office
Office européen des brevets

(11) **EP 1 462 167 B1**

(12) **FASCICULE DE BREVET EUROPEEN**

(45) Date de publication et mention de la délivrance du brevet:
**02.06.2010 Bulletin 2010/22**

(51) Int Cl.:
*B01J 29/80* (2006.01)   *B01J 29/10* (2006.01)
*B01J 29/16* (2006.01)

(21) Numéro de dépôt: **04290678.4**

(22) Date de dépôt: **11.03.2004**

(54) **Catalyseur comprenant au moins une zeolithe ZBM-30 et au moins une zeolithe y et procédé d'hydroconversion de charges hydrocarbonées utilisant un tel catalyseur**

Katalysator enthaltend mindestens einen Zeolith ZBM-30 und mindestens einen Zeolith Y und Verfahren zur Hydrokonversion von Kohlenwasserstoffen mit einem solchen Katalysator

Catalyst comprising at least one zeolite ZBM-30 and at least a zeolite Y and a process for the hydroconversion of hydrocarbons using such a zeolite

(84) Etats contractants désignés:
**BE DE DK FR GB NL**

(30) Priorité: **24.03.2003 FR 0303529**

(43) Date de publication de la demande:
**29.09.2004 Bulletin 2004/40**

(73) Titulaire: **Institut Français du Pétrole**
**92852 Rueil-Malmaison Cedex (FR)**

(72) Inventeurs:
• **Benazzi, Eric**
**78400 Chatou (FR)**
• **Guillon, Emmanuelle**
**69230 St Genis Laval (FR)**
• **Martens, Yohan**
**3040 Huldenberg (BE)**

(56) Documents cités:
**EP-A1- 0 046 504      EP-A1- 1 462 166**
**FR-A- 2 743 733      FR-A- 2 754 742**
**FR-A- 2 778 345      FR-A- 2 795 341**
**FR-A- 2 808 028**

Remarques:
Le dossier contient des informations techniques présentées postérieurement au dépôt de la demande et ne figurant pas dans le présent fascicule.

## Description

La présente invention concerne un catalyseur d'hydrocraquage des charges hydrocarbonées comprenant au moins une zéolithe ZBM-30 ou ZSM-48 et au moins une zéolithe Y, au moins un métal hydro-déshydrogénant choisi dans le groupe formé par les métaux du groupe VIB et du groupe VIII de la classification périodique, éventuellement au moins un élément choisi dans le groupe formé par le phosphore, le bore et le silicium, éventuellement au moins un élément du groupe VIIA, et éventuellement au moins un élément du groupe VIIB.

L'invention concerne également un procédé d'hydrocraquage/hydroconversion de charges hydrocarbonées utilisant un catalyseur qui comprend au moins une matrice, au moins une zéolithe ZBM-30 ou ZSM-48, au moins un métal hydro-déshydrogénant choisi dans le groupe formé par les métaux du groupe VIB et du groupe VIII de la classification périodique, au moins une zéolithe Y, éventuellement au moins un élément choisi dans le groupe formé par le phosphore, le bore et le silicium, éventuellement au moins un élément du groupe VIIA, et éventuellement au moins un élément du groupe VIIB. L'invention permet tout particulièrement d'obtenir des huiles de haute viscosité présentant des indices de viscosité (VI) supérieurs à 95-100, de préférence compris entre 95-150 et plus particulièrement entre 120-140.

## Art antérieur

L'hydrocraquage de coupes pétrolières lourdes est un procédé très important du raffinage qui permet de produire, à partir de charges lourdes excédentaires et peu valorisables, les fractions plus légères telles que essences, carburéacteurs et gazoles légers que recherche le raffineur pour adapter sa production à la structure de la demande. Certains procédés d'hydrocraquage permettent d'obtenir également un résidu fortement purifié pouvant constituer d'excellentes bases pour huiles. Par rapport au craquage catalytique, l'intérêt de l'hydrocraquage catalytique est de fournir des distillats moyens, carburéacteurs et gazoles, de très bonne qualité. L'essence produite présente un indice d'octane beaucoup plus faible que celle issue du craquage catalytique.

Un des grands intérêts de l'hydrocraquage est de présenter une grande flexibilité à divers niveaux : flexibilité au niveau des catalyseurs utilisés, qui amène une flexibilité des charges à traiter et au niveau des produits obtenus. Un des paramètres qu'il est possible de maîtriser est notamment l'acidité du support du catalyseur.

Les catalyseurs utilisés en hydrocraquage sont tous du type bifonctionnel associant une fonction acide à une fonction hydrogénante. La fonction acide est apportée par des supports de grandes surfaces (150 à 800 m$^2$.g$^{-1}$ généralement) présentant une acidité superficielle, tels que les alumines halogénées (chlorées ou fluorées notamment), les combinaisons d'oxydes de bore et d'aluminium, les silice-alumines amorphes et les zéolithes. La fonction hydrogénante est apportée soit par un ou plusieurs métaux du groupe VIII de la classification périodique des éléments, soit par une association d'au moins un métal du groupe VIB de la classification périodique et au moins un métal du groupe VIII.

L'équilibre entre les deux fonctions acide et hydrogénante est un des paramètres fondamentaux qui régissent l'activité et la sélectivité du catalyseur. Une fonction acide faible et une fonction hydrogénante forte donnent des catalyseurs peu actifs, travaillant à température en général élevée (supérieure ou égale à 390 °C), et à vitesse spatiale d'alimentation faible (la VVH exprimée en volume de charge à traiter par unité de volume de catalyseur et par heure est généralement inférieure ou égale à 2 h$^{-1}$) mais dotés d'une très bonne sélectivité en distillats moyens. Inversement, une fonction acide forte et une fonction hydrogénante faible donnent des catalyseurs actifs mais présentent de moins bonnes sélectivités en distillats moyens. La recherche d'un catalyseur convenable sera donc centrée sur un choix judicieux de chacune des fonctions pour ajuster le couple activité/sélectivité du catalyseur.

Les catalyseurs conventionnels de l'hydrocraquage catalytique sont, pour leur grande majorité, constitués de supports faiblement acides, tels les silice-alumines amorphes par exemple. Ces systèmes sont plus particulièrement utilisés pour produire des distillats moyens de très bonne qualité, et encore, lorsque leur acidité est très faible, des bases huiles.

Dans les supports peu acides, on trouve la famille des silices-alumines amorphes. Beaucoup de catalyseurs du marché de l'hydrocraquage sont à base de silice-alumine associée, soit à un métal du groupe VIII soit, de préférence quand les teneurs en poisons hétéroatomiques de la charge à traiter dépassent 0,5 % en poids, à une association de sulfures des métaux des groupes VIB et VIII. Ces systèmes ont une très bonne sélectivité en distillats moyens, et les produits formés sont de bonne qualité. Ces catalyseurs, pour les moins acides d'entre eux, peuvent également produire des bases lubrifiantes. L'inconvénient de tous ces systèmes catalytiques à base de support amorphe est, comme on l'a dit, leur faible activité.

Les catalyseurs comportant de la zéolithe Y de type structural FAU, ou les catalyseurs de type bêta présentent quant à eux une activité catalytique supérieure à celles des silice-alumines amorphes, mais présentent des sélectivités en produits légers qui sont plus élevées. Dans l'art antérieur, les zéolithes utilisées pour la préparation des catalyseurs d'hydrocraquage sont caractérisées par plusieurs grandeurs comme leur rapport molaire SiO$_2$/Al$_2$O$_3$ de charpente, leur paramètre cristallin, leur répartition poreuse, leur surface spécifique, leur capacité de reprise en ion sodium, ou encore leur capacité d'adsorption de vapeur d'eau. Ainsi dans des brevets précédents du demandeur (brevets français FR-A-2 754 742 et FR-A-2 754 826) il est utilisé une zéolithe dont le paramètre cristallin est compris entre 24,15 et 24,38 Å (1 Å = 0,1 nm), le rapport molaire SiO2/Al2O3 de charpente compris entre 500 et 21, la teneur en sodium inférieure à 0,15 % poids, la capacité de reprise en ion sodium supérieure à 0,85 g Na/100 g zéolithe, la surface spécifique supérieure à 400 m2/g, la capacité d'adsorption de vapeur d'eau supérieure à 6 % et de 1 à 20 % du volume poreux est contenu dans des pores de diamètre situé entre 20 et 80 Å.

Dans le brevet US-A-4 857 170, il est décrit l'utilisation en hydrocraquage d'une zéolithe modifiée de paramètre cristallin inférieur à 24,35 Å, mais dont le degré de cristallinité n'est pas ou peu affecté par les traitements modificateurs.

D'ailleurs, l'art antérieur montre qu'on a toujours recherché à maintenir dans les zéolithes utilisées des fractions cristallines (ou degré de cristallinité) et des taux de pics élevés.

Les travaux de recherche effectués par le demandeur sur de nombreuses zéolithes et solides microporeux l'ont conduit à découvrir que, au contraire et de façon surprenante, un procédé utilisant un catalyseur contenant au moins une zéolithe ZBM-30 ou ZSM-48et au moins une zéolithe Y permet d'atteindre des sélectivités en distillat moyen (kérosène et gasoil) nettement améliorées par rapport aux catalyseurs connus dans l'art antérieur.

## Description détaillée de l'invention

Plus précisément, l'invention a pour objet une composition comprenant au moins une matrice et au moins un élément (hydro-déshydrogénant) choisi dans le groupe formé par les éléments du groupe VIII et du groupe VIB, ledit catalyseur étant caractérisé en ce qu'il contient au moins une zéolithe ZBM-30 ou ZSM-48 et une zéolithe Y de type Faujasite. La zéolithe EU-2 est décrite dans l'article de *Journal of Chemical Research,* 192, (1985) et le brevet GB 2 077 709-A (correspondant à US-4 741 891 ; US-4 836 996 ; US-4 876 412 ; US-5 098 685), la zéolithe ZSM-48 est décrite dans l'article Zeolites, 5, 355, (1985), et les brevets EP-A-23 089, US-4 397 827, EP-A-15 132, EP-A-142 317 et US-5 961 591, la zéolithe EU-11 est décrite dans l'article Journal of Catalysis, 85, 135, (1985), et enfin la zéolithe ZBM-30 est décrite dans le brevet EP-A-46 504.

La zéolithe ZBM-30, est synthétisée de préférence selon le mode opératoire décrit dans le brevet (EP-A-46504) et en présence de triéthylène-tétramine.

Le rapport Si/Al global des zéolithes entrant dans la composition des catalyseurs selon l'invention ainsi que la composition chimique des échantillons sont déterminés par fluorescence X et absorption atomique.

Les rapports Si/Al des zéolithes décrites ci-dessus sont celles obtenues à la synthèse selon les modes opératoires décrits dans les différents documents cités ou bien obtenus après des traitements de désalumination post-synthèse bien connus de l'homme de l'art, tels que et à titre non exhaustif les traitements hydrothermiques suivis ou non d'attaques acides ou bien encore les attaques acides directes par des solutions d'acides minéraux ou organiques.

Les zéolithes entrant dans la composition du catalyseur selon l'invention sont calcinées et échangées par au moins un traitement par une solution d'au moins un sel d'ammonium de manière à obtenir la forme ammonium des zéolithes qui une fois calcinée conduit à la forme hydrogène des dites zéolithes.

Les zéolithes entrant dans la composition du catalyseur selon l'invention sont au moins en partie, de préférence pratiquement totalement, sous forme acide, c'est-à-dire sous forme hydrogène (H⁺). Le rapport atomique Na/T est généralement inférieur à 10% et de préférence inférieur à 5% et de manière encore plus préférée inférieur à 1 %.

Les zéolithes sont préparées selon les techniques généralement utilisées par la désalumination.

Le catalyseur selon l'invention comprend en outre une fonction hydrogénante. La fonction hydrogénante telle qu'elle a été définie précédemment, comporte de préférence au moins un métal choisi dans le groupe formé par les métaux du groupe VIB et du groupe VIII de la classification périodique des éléments.

Le catalyseur de la présente invention renferme au moins un élément noble ou non noble du groupe VIII tel que fer, cobalt, nickel, ruthénium, rhodium, palladium, osmium, iridium ou platine. Parmi les métaux du groupe VIII on préfère employer les métaux non nobles tels que fer, cobalt, nickel. La catalyseur selon l'invention peut renfermer au moins un élément du groupe VIB, de préférence le tungstène et le molybdène. D'une manière avantageuse on utilise les associations de métaux suivantes : nickel-molybdène, cobalt-molybdène, fer-molybdène, fer-tungstène, nickel-tungstène, cobalt-tungstène, les associations préférées sont : nickel-molybdène, cobalt-molybdène, nickel-tungstène. Il est également possible d'utiliser des associations de trois métaux par exemple nickel-cobalt-molybdène.

Le catalyseur de la présente invention renferme également au moins une matrice minérale poreuse amorphe ou mal cristallisée de type oxyde. On peut citer à titre d'exemples non limitatifs les alumines, les silices, les silice-alumines. On peut choisir également les aluminates. On préfère utiliser des matrices contenant de l'alumine, sous toutes ses formes connues de l'Homme du métier, et de manière encore plus préférée les alumines, par exemple l'alumine gamma.

Dans une mise en oeuvre de l'invention, le catalyseur renferme de préférence au moins un élément dopant choisi dans le groupe formé par le bore, le silicium et le phosphore, de préférence le bore et/ou le silicium. Le catalyseur renferme éventuellement au moins un élément du groupe VIIA, de préférence le chlore et le fluor, et encore éventuellement au moins un élément du groupe VIIB.

Le bore, le silicium et/ou le phosphore peuvent être dans la matrice, la zéolithe ou sont de préférence déposés sur le catalyseur et alors principalement localisés sur la matrice.

L'élément introduit, et en particulier le silicium, principalement localisé sur la matrice du support peut être caractérisé par des techniques telles que la microsonde de Castaing (profil de répartition des divers éléments), la microscopie électronique par transmission couplée à une analyse X des composants du catalyseurs, ou bien encore par l'établissement d'une cartographie de répartition des éléments présents dans le catalyseur par microsonde électronique.

Le catalyseur selon l'invention contient en outre une zéolithe Y, par exemple de type Faujasite.

Différentes zéolithes Y peuvent être utilisées.

Une zéolithe acide H-Y particulièrement avantageuse est caractérisée par différentes spécifications : un rapport molaire global $SiO_2/Al_2O_3$ compris entre environ 6 et 70 et de manière préférée entre environ 12 et 50 : une teneur en sodium inférieure à 0,15 % poids déterminée sur la zéolithe calcinée à 1100 °C ; un paramètre cristallin a de la maille élémentaire compris entre $24,58 \times 10^{-10}$ m et $24,24 \times 10^{-10}$ m et de manière préférée entre $24,38 \times 10^{-10}$ m et $24,26 \times 10^{-10}$ m ; une capacité CNa de reprise en ions sodium, exprimée en gramme de Na par 100 grammes de zéolithe modifiée, neutralisée puis calcinée, supérieure à environ 0,85 ; une surface spécifique déterminée par la méthode B.E.T. supérieure à environ 400 $m^2$/g et de préférence supérieure à 550 $m^2$/g, une capacité d'adsorption de vapeur d'eau à 25 °C pour une pression partielle de 2,6 torrs (soit 34,6 MPa), supérieure à environ 6 %, et avantageusement, la zéolithe présente une répartition poreuse, déterminée par physisorption d'azote, comprenant entre 5 et 45 % et de préférence entre 5 et 40 % du volume poreux total de la zéolithe contenu dans des pores de diamètre situé entre $20 \times 10^{-10}$m et $80 \times 10^{-10}$m, et entre 5 et 45 % et de préférence entre 5 et 40 % du volume poreux total de la zéolithe contenu dans des pores de diamètre supérieur à $80 \times 10^{-10}$m et généralement inférieur à $1000 \times 10^{-10}$m, le reste du volume poreux étant contenu dans les pores de diamètre inférieur à $20 \times 10^{-10}$ m.

Un catalyseur préféré utilisant ce type de zéolithe renferme une matrice, au moins une zéolithe Y désaluminée et possédant un paramètre cristallin compris entre 2,424 nm et 2,455 nm, de préférence entre 2,426 et 2,438 nm, un rapport molaire $SiO_2/Al_2O_3$ global supérieur à 8, une teneur en cations des métaux alcalino-terreux ou alcalins et/ou des cations des terres rares telle que le rapport atomique $(n \times M^{n+})/Al$ est inférieur à 0,8 de préférence inférieur à 0,5 ou encore à 0,1, une surface spécifique déterminée par la méthode B.E.T supérieure à 400 $m^2$/g de préférence supérieure à 550 $m^2$/g, et une capacité d'adsorption d'eau à 25 °C pour une valeur P/Po de 0,2, supérieure à 6 % poids, ledit catalyseur comprenant également au moins un métal hydro-déshydrogénant, et du silicium déposé sur le catalyseur.

Dans un mode de réalisation avantageux selon l'invention, on considère un catalyseur comprenant au moins une matrice, au moins un élément choisi dans le groupe formé par les éléments du groupe VIII et du groupe VIB et une zéolithe Y partiellement amorphe.

On entend par zéolithe Y partiellement amorphe, un solide présentant :

i) un taux de pic qui est inférieur à 0,40 de préférence inférieur à environ 0,30 ;
ii) une fraction cristalline exprimée par rapport à une zéolithe Y de référence sous forme sodique (Na) qui est inférieure à environ 60 %, de préférence inférieure à environ 50 %, et déterminée par diffraction des rayons X.
De préférence, les zéolithes Y partiellement amorphes, solides entrant dans la composition du catalyseur selon l'invention présentent l'une au moins (et de préférence toutes) des autres caractéristiques suivantes :
iii) un rapport Si/Al global supérieur à 15, de préférence supérieur à 20 et inférieur à 150,
iv) un rapport Si/Al [IV] de charpente supérieur ou égal au rapport Si/Al global
v) un volume poreux au moins égal à 0,20 ml/g de solide dont une fraction, comprise entre 8 % et 50 %, est constituée de pores ayant un diamètre d'au moins 5 nm (nanomètre), soit 50 Å ;
vi) une surface spécifique de 210-800 $m^2$/g , de préférence 250-750 $m^2$/g et avantageusement 300-600 $m^2$/g

Les taux de pics et les fractions cristallines sont déterminés par diffraction des rayons X par rapport à une zéolithe de référence, en utilisant une procédure dérivée de la méthode ASTM D3906-97 « Détermination of Relative X-ray Diffraction Intensities of Faujasite-Type-Containing Materials ». On pourra se référer à cette méthode pour les conditions générales d'application de la procédure et, en particulier, pour la préparation des échantillons et des références.

Un diffractogramme est composé des raies caractéristiques de la fraction cristallisée de l'échantillon et d'un fond, provoqué essentiellement par la diffusion de la fraction amorphe ou microcristalline de l'échantillon (un faible signal de diffusion est lié à l'appareillage, air, porte-échantillon, etc.) Le taux de pics d'une zéolithe est le rapport, dans une zone angulaire prédéfinie (typiquement 8 à 40° 2θ lorsqu'on utilise le rayonnement Kα du cuivre, 1 = 0,154 nm), de l'aire des raies de la zéolithe (pics) sur l'aire globale du diffractogramme (pics + fond). Ce rapport pics/(pics + fond) est proportionnel à la quantité de zéolithe cristallisée dans le matériau. Pour estimer la fraction cristalline d'un échantillon de zéolithe Y, on comparera le taux de -pics de l'échantillon à celui d'une référence considérée comme 100 % cristallisée (NaY par exemple). Le taux de pics d'une zéolithe NaY parfaitement cristallisée est de l'ordre de 0,55 à 0,60.

Le taux de pics d'une zéolithe USY classique est de 0,45 à 0,55, sa fraction cristalline par rapport à une NaY parfaitement cristallisée est de 80 à 95 %. Le taux de pics du solide faisant l'objet de la présente description est inférieur à 0,4 et de préférence inférieur à 0,35. Sa fraction cristalline est donc inférieure à 70 %, de préférence inférieure à 60 %.

Les zéolithes partiellement amorphes sont préparées selon les techniques généralement utilisées pour la désalumination, à partir de zéolithes Y disponibles commercialement, c'est-à-dire qui présentent généralement des cristallinités élevées (au moins 80 %). Plus généralement on pourra partir de zéolithes ayant une fraction cristalline d'au moins 60 %, ou d'au moins 70 %.

Les zéolithes Y utilisées généralement dans les catalyseurs d'hydrocraquage sont fabriquées par modification de zéolithes Na-Y disponibles commercialement. Cette modification permet d'aboutir à des zéolithes dites stabilisées, ultra-stabilisées ou encore désaluminées. Cette modification est réalisée par l'une au moins des techniques de désalumination, et par exemple le traitement hydrothermique, l'attaque acide. De préférence, cette modification est réalisée par combinaison de trois types d'opérations connues de l'homme de l'art : le traitement hydrothermique, l'échange ionique et l'attaque acide.

Une autre zéolithe particulièrement intéressante est une zéolithe non désaluminée globalement et très acide.

Par zéolithe non désaluminée globalement on entend une zéolithe Y (type structural FAU, faujasite) selon la nomenclature développée dans "Atlas of zéolites structure types", W.M. Meier, D.H. Olson et Ch. Baerlocher, 4th revised Edition 1996, Elsevier. Le paramètre cristallin de cette zéolithe peut avoir diminué par extraction des aluminiums de la structure ou charpente lors de la préparation mais le rapport $SiO_2/Al_2O_3$ global n'a pas changé car les aluminiums n'ont pas été extraits chimiquement. Une telle zéolithe non désaluminée globalement a donc une composition en silicium et aluminium exprimée par le rapport $SiO_2/Al_2O_3$ global équivalent à la zéolithe Y non désaluminée de départ. Les valeurs des paramètres (rapport $SiO_2/Al_2O_3$ et paramètre cristallin) sont données plus loin. Cette zéolithe Y non désaluminée globalement peut soit être sous la forme hydrogène soit être au moins partiellement échangée avec des cations métalliques, par exemple à l'aide de cations des métaux alcalino-terreux et/ou des cations de métaux de terres rares de numéro atomiques 57 à 71 inclus. On préférera une zéolithe dépourvue de terres rares et d'alcalino-terreux, de même pour le catalyseur.

La zéolithe Y non globalement désaluminée présente généralement un paramètre cristallin supérieur à 2,438 nm, un rapport $SiO_2 / Al_2O_3$ global inférieur à 8, un rapport molaire $SiO_2 / Al_2O_3$ de charpente inférieur à 21 et supérieur au rapport $SiO_2 / Al_2O_3$ global. Un catalyseur avantageux combine cette zéolithe avec une matrice dopée au phosphore.

La zéolithe globalement non désaluminée peut être obtenue par tout traitement qui n'extrait pas les aluminium de l'échantillon, tel que par exemple le traitement à la vapeur d'eau, le traitement par $SiCl_4$.

Le catalyseur selon la présente invention renferme généralement en % poids par rapport à la masse totale du catalyseur :

- 0,1 à 60 %, de préférence de 0,1 à 50 % et de manière encore plus préférée de 0,1 à 40 % d'au moins un métal hydro-déshydrogénant choisi dans le groupe formé par les métaux du groupe VIB et du groupe VIII,
- 1 à 99 % et de préférence 2 à 98 %, de préférence de 5 à 95 % d'au moins une matrice minérale poreuse amorphe ou mal cristallisée de type oxyde
- ledit catalyseur renferme également de 0,1 à 99 %, de préférence de 0,1 à 99,8 %, de préférence de 0,1 à 90 %, de préférence de 0,1 à 80 % d'au moins une zéolithe ZBM-30 ou ZSM-48,

ledit catalyseur renfermant éventuellement :

- de 0 à 20 %, de préférence de 0,1 à 15 % et de manière encore plus préférée de 0,1 à 10 % d'au moins un élément promoteur choisi dans le groupe formé par le silicium, le bore et le phosphore, et de préférence le bore et /ou le silicium.
- 0 à 20 %, de préférence de 0,1 à 15 % et de manière encore plus préférée de 0,1 à 10 % d'au moins un élément choisi dans le groupe VIIA, de préférence le fluor.
- 0 à 20 %, de préférence de 0,1 à 15 % et de manière encore plus préférée de 0,1 à 10 % d'au moins un élément choisi dans le groupe VIIB.
- 0 à 40 %, de préférence de 0 à 30 % poids d'une zéolithe Y telle que décrite précédemment dans le texte.

Les métaux du groupe VIB, du groupe VIII et du groupe VIIB du catalyseur de la présente invention peuvent être présent en totalité ou partiellement sous la forme métallique et/ou oxyde et/ou sulfure.

Ce catalyseur peut être préparé par toutes les méthodes bien connues de l'homme du métier. Avantageusement, il est obtenu par mélange de la matrice et de la zéolithe puis le mélange est mis en forme. L'élément hydrogénant est introduit lors du mélange, ou de manière préférée après mise en forme. La mise en forme est suivie d'une calcination, l'élément hydrogénant est introduit avant ou après cette calcination. La préparation se termine par une calcination à une température de 250 à 600 °C. Une des méthodes préférées selon la présente invention consiste à malaxer la poudre de zéolithe ZBM-30 ou ZSM-48 dans un gel humide d'alumine pendant quelques dizaines de minutes, puis à passer la pâte ainsi obtenue à travers une filière pour former des extrudés de diamètre compris entre 0,4 et 4 mm.

La fonction hydrogénante peut être introduite en partie seulement (cas, par exemple, des associations d'oxydes de métaux des groupes VIB et VIII) ou en totalité au moment du malaxage de la zéolithe, avec le gel d'oxyde choisi comme matrice.

La fonction hydrogénante peut être introduite par une ou plusieurs opérations d'échange ionique sur le support calciné constitué d'une zéolithe telle que précédemment décrit, dispersée dans la matrice choisie, à l'aide de solutions contenant les sels précurseurs des métaux choisis.

La fonction hydrogénante peut être introduite par une ou plusieurs opérations d'imprégnation du support mis en forme et calciné, par une solution contenant au moins un précurseur d'au moins un oxyde d'au moins un métal choisi dans le groupe formé par les métaux du groupes VIII et les métaux du groupe VIB, le(s) précurseur(s) d'au moins un oxyde d'au moins un métal du groupe VIII étant de préférence introduit(s) après ceux du groupe VIB ou en même temps que ces derniers, si le catalyseur contient au moins un métal du groupe VIB et au moins un métal du groupe VIII.

Dans le cas où le catalyseur contient au moins un élément du groupe VIB par exemple le molybdène, il est par exemple possible d'imprégner le catalyseur avec une solution contenant au moins un élément du groupe VIB, de sécher, de calciner. L'imprégnation du molybdène peut être facilitée par ajout d'acide phosphorique dans les solutions de paramolybdate d'ammonium, ce qui permet d'introduire aussi le phosphore de façon à promouvoir l'activité catalytique.

Dans un mode de réalisation préféré de l'invention, le catalyseur contient à titre de dopant au moins un élément choisi parmi le silicium, le bore et le phosphore. Ces éléments sont introduits sur un support contenant déjà au moins une zéolithe ZBM-30 ou ZSM-48, au moins une matrice, comme définie ci-avant, et au moins un métal choisi dans le groupe formé par les métaux du groupe VIB et les métaux du groupe VIII.

Dans le cas où le catalyseur contient du bore, du silicium et du phosphore et éventuellement l'élément choisi dans le groupe VIIA des ions halogénures et éventuellement au moins un élément choisi dans le groupe VIIB, ces éléments peuvent être introduits dans le catalyseur à divers niveaux de la préparation et de diverses manières.

L'imprégnation de la matrice est de préférence effectuée par la méthode d'imprégnation dite "à sec" bien connue de l'homme du métier. L'imprégnation peut être effectuée en une seule étape par une solution contenant l'ensemble des éléments constitutifs du catalyseur final.

Le P, B, Si et l'élément choisi parmi les ions halogénures du groupe VIIA, peuvent être introduits par une ou plusieurs opérations d'imprégnation avec excès de solution sur le précurseur calciné.

Dans le cas où le catalyseur contient du bore, une méthode préférée selon l'invention consiste à préparer une solution aqueuse d'au moins un sel de bore tel que le biborate d'ammonium ou le pentaborate d'ammonium en milieu alcalin et en présence d'eau oxygénée et à procéder à une imprégnation dite à sec, dans laquelle on remplit le volume des pores du précurseur par la solution contenant le bore.

Dans le cas où le catalyseur contient du silicium, on utilisera une solution d'un composé du silicium de type silicone.

Dans le cas où le catalyseur contient du bore et du silicium, le dépôt de bore et de silicium peut aussi se faire de manière simultanée en utilisant une solution contenant un sel de bore et un composé du silicium de type silicone. Ainsi, par exemple dans le cas où par exemple le précurseur est un catalyseur de type nickel-molybdène supporté sur un support contenant de la zéolithe et de l'alumine, il est possible d'imprégner ce précurseur par de la solution aqueuse de biborate d'ammonium et de silicone Rhodorsil E1P de la société Rhône Poulenc, de procéder à un séchage par exemple à 80 °C, puis d'imprégner par une solution de fluorure d'ammonium, de procéder à un séchage par exemple à 80 °C, et de procéder à une calcination par exemple et de façon préférée sous air en lit traversé, par exemple à 500 °C pendant 4 heures.

Dans le cas où le catalyseur contient au moins un élément du groupe VIIA, de préférence le fluor, il est par exemple possible d'imprégner le catalyseur par une solution de fluorure d'ammonium, de procéder à un séchage par exemple à 80 °C, et de procéder à une calcination par exemple et de façon préférée sous air en lit traversé, par exemple à 500 °C pendant 4 heures.

D'autres séquences d'imprégnation peuvent être mises en oeuvre pour obtenir le catalyseur de la présente invention.

Dans le cas où le catalyseur contient du phosphore, il est par exemple possible d'imprégner le catalyseur avec une solution contenant du phosphore, de sécher, de calciner.

Dans le cas où les éléments contenus dans le catalyseur, c'est à dire au moins un métal choisi dans le groupe formé par les métaux du groupe VIII et du groupe VIB, éventuellement le bore, le silicium, le phosphore, au moins un élément du groupe VIIA, au moins un élément du groupe VIIB, sont introduits en plusieurs imprégnations des sels précurseurs correspondants, une étape de séchage intermédiaire du catalyseur est généralement effectuée à une température généralement comprise entre 60 et 250 °C et une étape de calcination intermédiaire du catalyseur est généralement effectuée à une température comprise entre 250 et 600 °C.

Afin de terminer la préparation du catalyseur, on laisse reposer le solide humide sous une atmosphère humide à une température comprise entre 10 et 80 °C, puis on sèche le solide humide obtenu à une température comprise entre 60 et 150 °C, et enfin on calcine le solide obtenu à une température comprise entre 150 et 800 °C.

Les sources d'éléments du groupe VIB qui peuvent être utilisées sont bien connues de l'homme du métier. Par exemple, parmi les sources de molybdène et de tungstène, on peut utiliser les oxydes et hydroxydes, les acides molybdiques et tungstiques et leurs sels en particulier les sels d'ammonium tels que le molybdate d'ammonium, l'heptamolybdate d'ammonium, le tungstate d'ammonium, l'acide phosphomolybdique, l'acide phosphotungstique et leurs sels, l'acide silicomolybdique, l'acide silicotungstique et leurs sels. On utilise de préférence les oxydes et les sels d'ammonium tels que le molybdate d'ammonium, l'heptamolybdate d'ammonium et le tungstate d'ammonium.

Les sources d'éléments du groupe VIII qui peuvent être utilisées sont bien connues de l'homme du métier. Par exemple, pour les métaux non nobles on utilisera les nitrates, les sulfates, les phosphates, les halogénures par exemple, chlorures, bromures et fluorures, les carboxylates par exemple acétates et carbonates. Pour les métaux nobles on utilisera les halogénures, par exemple les chlorures, les nitrates, les acides tels que l'acide chloroplatinique, les oxychlorures tels que l'oxychlorure ammoniacal de ruthénium.

La source de phosphore préférée est l'acide orthophosphorique $H_3PO_4$, mais ses sels et esters comme les phosphates d'ammonium conviennent également. Le phosphore peut par exemple être introduit sous la forme d'un mélange d'acide phosphorique et un composé organique basique contenant de l'azote tels que l'ammoniaque, les amines primaires et secondaires, les amines cycliques, les composés de la famille de la pyridine et des quinoléines et les composés de la famille du pyrrole.

De nombreuses sources de silicium peuvent être employées. Ainsi, on peut utiliser l'orthosilicate d'éthyle Si(OEt)$_4$, les siloxanes, les polysiloxanes, les silicates d'halogénures comme le fluorosilicate d'ammonium $(NH_4)_2SiF_6$ ou le fluorosilicate de sodium $Na_2SiF_6$. L'acide silicomolybdique et ses sels, l'acide silicotungstique et ses sels peuvent également être avantageusement employés. Le silicium peut être ajouté par exemple par imprégnation de silicate d'éthyle en solution dans un mélange eau/alcool. Le silicium peut être ajouté par exemple par imprégnation d'un composé du silicium de type silicone mis en suspension dans l'eau.

La source de bore peut être l'acide borique, de préférence l'acide orthoborique $H_3BO_3$, le biborate ou le pentaborate d'ammonium, l'oxyde de bore, les esters boriques. Le bore peut par exemple être introduit sous la forme d'un mélange d'acide borique, d'eau oxygénée et un composé organique basique contenant de l'azote tels que l'ammoniaque, les amines primaires et secondaires, les amines cycliques, les composés de la famille de la pyridine et des quinoléines et les composés de la famille du pyrrole. Le bore peut être introduit par exemple par une solution d'acide borique dans un mélange eau/alcool.

Les sources d'éléments du groupe VIIA qui peuvent être utilisées sont bien connues de l'homme du métier. Par exemple, les anions fluorures peuvent être introduits sous forme d'acide fluorhydrique ou de ses sels. Ces sels sont formés avec des métaux alcalins, l'ammonium ou un composé organique. Dans ce dernier cas, le sel est avantageusement formé dans le mélange réactionnel par réaction entre le composé organique et l'acide fluorhydrique. Il est également possible d'utiliser des composés hydrolysables pouvant libérer des anions fluorures dans l'eau, comme le fluorosilicate d'ammonium $(NH_4)_2SiF_6$, le tétrafluorure de silicium $SiF_4$ ou de sodium $Na_2SiF_6$. Le fluor peut être introduit par exemple par imprégnation d'une solution aqueuse d'acide fluorhydrique ou de fluorure d'ammonium.

Les sources d'éléments du groupe VIIB qui peuvent être utilisées sont bien connues de l'homme du métier. On utilise de préférence les sels d'ammonium, les nitrates et les chlorures.

Les catalyseurs ainsi obtenus, sous forme oxydes, peuvent éventuellement être amenés au moins en partie sous forme métallique ou sulfure.

Les catalyseurs obtenus par la présente invention sont mis en forme sous la forme de grains de différentes formes et dimensions. Ils sont utilisés en général sous la forme d'extrudés cylindriques ou polylobés tels que bilobés, trilobés, polylobés de forme droite ou torsadée, mais peuvent éventuellement être fabriqués et employés sous la forme de poudre concassées, de tablettes, d'anneaux, de billes, de roues. Ils présentent une surface spécifique mesurée par adsorption d'azote selon la méthode BET (Brunauer, Emmett, Teller, J. Am. Chem. Soc., vol. 60, 309-316 (1938)) comprise entre 50 et 600 m²/g, un volume poreux mesuré par porosimétrie au mercure compris entre 0,2 et 1,5 cm³/g et une distribution en taille de pores pouvant être monomodale, bimodale ou polymodale.

Les catalyseurs ainsi obtenus sont utilisés pour la conversion de charges hydrocarbonées (au sens large de transformation) et en particulier pour l'hydrocraquage.

**Charges**

Les catalyseurs de la présente invention sont utilisés pour l'hydrocraquage de charges hydrocarbonées telles que les coupes pétrolières. Les charges employées dans le procédé sont des essences, des kérosènes, des gas-oils, des gas-oils sous vide, des résidus atmosphériques, des résidus sous vide, des distillats atmosphériques, des distillats sous vide, des fuels lourds, des huiles, des cires et des paraffines, des huiles usagées, des résidus ou des bruts désasphaltés, des charges provenant des procédés de conversions thermiques ou catalytiques et leurs mélanges. Elles contiennent des hétéroatomes tels que soufre, oxygène et azote et éventuellement des métaux. Les charges issues du procédé Fischer-Tropsch sont exclues.

Les catalyseurs de l'invention sont utilisés avantageusement pour l'hydrocraquage en particulier de coupes hydrocarbonées lourdes de type distillats sous vide, résidus désasphaltés ou hydrotraités ou équivalents. Les coupes lourdes sont de préférence constituées d'au moins 80 % en volume de composés dont les points d'ébullition sont d'au moins 350 °C et de préférence entre 350 et 580 °C (c'est-à-dire correspondant à des composés contenant au moins 15 à 20 atomes de carbone). Elles contiennent généralement des hétéroatomes tels que soufre et azote. La teneur en azote est usuellement comprise entre 1 et 5000 ppm poids et la teneur en soufre entre 0,01 et 5 % poids.

Les catalyseurs utilisés dans le procédé d'hydrocraquage de charges hydrocarbonées selon l'invention sont de préférence soumis à un traitement de sulfuration permettant de transformer, au moins en partie, les espèces métalliques en sulfure avant leur mise en contact avec la charge à traiter. Ce traitement d'activation par sulfuration est bien connu de l'Homme du métier et peut être effectué par toute méthode déjà décrite dans la littérature.

Une méthode de sulfuration classique bien connue de l'homme du métier consiste à chauffer en présence d'hydrogène sulfuré à une température comprise entre 150 et 800 °C, de préférence entre 250 et 600 °C, généralement dans une zone réactionnelle à lit traversé.

Le catalyseur de la présente invention peut être avantageusement employé pour l'hydrocraquage de coupes de type distillats sous vide fortement chargées en soufre et azote. Les produits recherchés sont des distillats moyens et/ou des huiles. Avantageusement, l'hydrocraquage est employé en combinaison avec une étape préalable d'hydrotraitement dans un procédé pour la production améliorée de distillats moyens conjointement à la production de bases huiles ayant un indice de viscosité compris entre 95 et 150.

## Procédés d'hydrocraquage

L'invention concerne également les procédés d'hydrocraquage mettant en oeuvre les catalyseurs d'hydrocraquage selon l'invention.

Les conditions de l'hydrocraquage telles que température, pression, taux de recyclage d'hydrogène, vitesse volumique horaire, pourront être très variables en fonction de la nature de la charge, de la qualité des produits désirés et des installations dont dispose le raffineur. La température est en général supérieure à 200 °C et souvent comprise entre 250 et 480 °C. La pression est supérieure à 0,1 MPa et souvent supérieure à 1 MPa. Le taux de recyclage d'hydrogène est au minimum de 50 et souvent compris entre 80 et 5000 normaux litres d'hydrogène par litre de charge. La vitesse volumique horaire est comprise en général entre 0,1 et 20 volume de charge par volume de catalyseur et par heure.

Les procédés d'hydrocraquage selon l'invention couvrent les domaines de pression et de conversion allant de l'hydrocraquage doux à l'hydrocraquage haute pression.

On entend par hydrocraquage doux, un hydrocraquage conduisant à des conversions modérées, généralement inférieures à 55 %, et fonctionnant à basse pression, généralement entre 2 MPa et 12 MPa.

On entend par hydrocraquage haute pression, un hydrocraquage conduisant à des conversions élevées, généralement supérieures à 55 %, et fonctionnant à haute pression, généralement supérieure à 5 MPa.

Le catalyseur de la présente invention peut être utilisé seul, en un seul ou plusieurs lits catalytiques, dans un ou plusieurs réacteurs, dans un schéma d'hydrocraquage dit en une étape, avec ou sans recyclage liquide de la fraction non convertie, éventuellement en association avec un catalyseur d'hydroraffinage situé en amont du catalyseur de la présente invention.

Dans un schéma d'hydrocraquage en deux étapes avec séparation intermédiaire entre les deux zones réactionnelles, le catalyseur de la présente invention est utilisé dans la deuxième zone réactionnelle, dans un ou plusieurs lits, dans un ou plusieurs réacteurs, en association ou non avec un catalyseur d'hydroraffinage situé en amont du catalyseur de la présente invention.

## Procédé dit "en une étape"

L'hydrocraquage en une étape, comporte en premier lieu et de façon générale un hydroraffinage poussé qui a pour but de réaliser une hydrodésazotation et une désulfuration poussées de la charge avant que celle-ci ne soit envoyée sur le catalyseur d'hydrocraquage proprement dit, en particulier dans le cas où celui-ci comporte une zéolithe. Cet hydroraffinage poussé de la charge n'entraîne qu'une conversion limitée de la charge, en fractions plus légères, qui reste insuffisante et doit donc être complétée sur le catalyseur d'hydrocraquage plus actif. Cependant, il est à noter qu'aucune séparation n'intervient entre les deux types de catalyseurs. La totalité de l'effluent en sortie de réacteur est injectée sur le catalyseur d'hydrocraquage proprement dit et ce n'est qu'ensuite qu'une séparation des produits formés est réalisée. Cette version de l'hydrocraquage, encore appelée "Once Through", possède une variante qui présente un recyclage de la fraction non convertie vers le réacteur en vue d'une conversion plus poussée de la charge.

Dans un premier mode de réalisation ou d'hydrocraquage partiel encore appelé hydrocraquage doux, le niveau de conversion est inférieur à 55 %. Le catalyseur selon l'invention est alors employé à une température en général supérieure ou égale à 230 °C et de préférence à 300 °C, généralement d'au plus 480 °C, et souvent comprise entre 350 et 450 °C. La pression est en général supérieure à 2 MPa et de préférence 3 MPa, elle est inférieure à 12 MPa et de préférence inférieure à 10 MPa. La quantité d'hydrogène est au minimum de 100 normaux litres d'hydrogène par litre de charge et souvent comprise entre 200 et 3000 normaux litres d'hydrogène par litre de charge. La vitesse volumique horaire est comprise en général entre 0,1 et 10 h$^{-1}$. Dans ces conditions, les catalyseurs de la présente invention présentent une meilleure activité en conversion, en hydrodésulfuration et en hydrodésazotation que les catalyseurs commerciaux.

Dans un second mode de réalisation, l'hydrocraquage est réalisé à haute pression (pression totale supérieure à 5 MPa), le niveau de conversion est alors avantageusement supérieur à 55 %.

## Mode de réalisation : Procédé deux étapes

L'hydrocraquage en deux étapes, comporte une première étape qui a pour objectif, comme dans le procédé "une étape", de réaliser l'hydroraffinage de la charge, mais aussi d'atteindre une conversion de cette dernière de l'ordre en général de 40 à 60 %. L'effluent issu de la première étape subit ensuite une séparation (distillation) appelée le plus souvent séparation intermédiaire, qui a pour objectif de séparer les produits de conversion de la fraction non convertie. Dans la deuxième étape d'un procédé d'hydrocraquage en deux étapes, seule la fraction de la charge non convertie lors de la première étape, est traitée. Cette séparation permet à un procédé d'hydrocraquage deux étapes d'être plus sélectif en distillat moyen (kérosène + diesel) qu'un procédé en une étape. En effet, la séparation intermédiaire des produits de conversion évite leur "sur-craquage" en naphta et gaz dans la deuxième étape sur le catalyseur d'hydrocraquage. Par ailleurs, il est à noter que la fraction non convertie de la charge traitée dans la deuxième étape contient en général de très faibles teneurs en NH$_3$ ainsi qu'en composés azotés organiques, en général moins de 20 ppm poids voire moins de 10 ppm poids.

Les catalyseurs utilisés dans la deuxième étape des procédés d'hydrocraquage en deux étapes sont de préférence les catalyseurs à base d'éléments du groupe VIII nobles, de manière encore plus préférée les catalyseurs à base de platine et/ou de palladium.

Dans le cas où le procédé de conversion de coupe pétrolière se déroule en deux étapes, les catalyseurs décrits dans le cadre du procédé de l'invention sont utilisés dans la deuxième étape.

Le procédé de la présente invention peut être employé pour l'hydrocraquage partiel, avantageusement dans des conditions de pression modérée, de coupes par exemple de type distillats sous vide fortement chargées en soufre et azote qui ont été préalablement hydrotraitées. Dans ce mode d'hydrocraquage le niveau de conversion est inférieur à 55 %. Le catalyseur de la première étape peut être tout catalyseur d'hydrotraitement contenu dans l'état de la technique. Ce catalyseur d'hydrotraitement comprend avantageusement une matrice de préférence à base d'alumine et au moins un métal ayant une fonction hydrogénante. La fonction d'hydrotraitement est assurée par au moins un métal ou composé de métal, seul ou en combinaison, choisi parmi les métaux du groupe VIII et du groupe VIB, tels que choisis parmi le nickel, le cobalt, le molybdène et le tungstène notamment. De plus, ce catalyseur peut contenir éventuellement du phosphore et éventuellement du bore.

La première étape se déroule généralement à une température de 350-460 °C, de préférence 360-450 °C, une pression totale d'au moins 2 MPa; et de préférence 3 MPa, une vitesse volumique horaire de 0,1-5h$^{-1}$ et de préférence 0.2-2h$^{-1}$ et avec une quantité d'hydrogène d'au moins 100 NI/NI de charge, et de préférence 260-3000 NI/NI de charge.

Pour l'étape de conversion avec le catalyseur selon l'invention (ou seconde étape), les températures sont en général supérieures ou égales à 230 °C et souvent comprises entre 300 et 480 °C, de préférence entre 330° C et 450° C. La pression est en général d'au moins 2 MPa et de préférence 3 MPa, elle est inférieure à 12 MPa et de préférence inférieure à 10 MPa. La quantité d'hydrogène est au minimum de 100l/l de charge et souvent comprise entre 200 et 3000 l/l d'hydrogène par litre de charge. La vitesse volumique horaire est comprise en général entre 0,15 et 10 h$^{-1}$. Dans ces conditions, les catalyseurs de la présente invention présentent une meilleure activité en conversion, en hydrodésulfuration, en hydrodésazotation et une meilleure sélectivité en distillats moyens que les catalyseurs commerciaux. La durée de vie des catalyseurs est également améliorée dans la plage de pression modérée.

Dans un autre mode de réalisation en deux étapes, le catalyseur de la présente invention peut être employé pour l'hydrocraquage dans des conditions de pression élevées d'au moins 5 MPa. Les coupes traitées sont par exemple de type distillats sous vide fortement chargés en soufre et azote qui ont été préalablement hydrotraités. Dans ce mode d'hydrocraquage le niveau de conversion est supérieur à 55 %. Dans ce cas, le procédé de conversion de coupe pétrolière se déroule en deux étapes, le catalyseur selon l'invention étant utilisé dans la deuxième étape.

Le catalyseur de la première étape peut être tout catalyseur d'hydrotraitement contenu dans l'état de la technique. Ce catalyseur d'hydrotraitement comprend avantageusement une matrice de préférence à base d'alumine et au moins un métal ayant une fonction hydrogénante. La fonction d'hydrotraitement est assurée par au moins un métal ou composé de métal, seul ou en combinaison, choisi parmi les métaux du groupe VIII et du groupe VIB, tels que choisis parmi le nickel, le cobalt, le molybdène et le tungstène notamment. De plus, ce catalyseur peut contenir éventuellement du phosphore et éventuellement du bore.

La première étape se déroule généralement à une température de 350-460 °C, de préférence 360-450 °C, une pression supérieure à 3 MPa, une vitesse volumique horaire de 0,1-5 h⁻¹ et de préférence 0,2-2 h⁻¹ et avec une quantité d'hydrogène d'au moins 100 Nl/Nl de charge, et de préférence 260-3000 Nl/Nl de charge.

Pour l'étape de conversion avec le catalyseur selon l'invention (ou seconde étape), les températures sont en général supérieures ou égales à 230 °C et souvent comprises entre 300 et 480 °C et de préférence entre 300 et 440 °C. La pression est en général supérieure à 5 MPa et de préférence supérieure à 7 MPa. La quantité d'hydrogène est au minimum de 100l/l de charge et souvent comprise entre 200 et 3000 l/l d'hydrogène par litre de charge. La vitesse volumique horaire est comprise en général entre 0,15 et 10 h⁻¹.

Dans ces conditions, les catalyseurs de la présente invention présentent une meilleure activité en conversion et une meilleure sélectivité en distillats moyens que les catalyseurs commerciaux, même pour des teneurs en zéolithe considérablement plus faibles que celles des catalyseurs commerciaux.

Dans un procédé de production d'huiles utilisant avantageusement le procédé d'hydrocraquage selon l'invention, il est opéré selon l'enseignement du brevet US-A-5 525 209 avec une première étape d'hydrotraitement dans de conditions permettant d'atteindre un effluent ayant un indice de viscosité de 90-130 et une teneur réduite en azote et en composés polyaromatiques. Dans une-étape suivante d'hydrocraquage, l'effluent est traité selon l'invention et de façon à ajuster la valeur de l'indice de viscosité à celle souhaitée par l'exploitant.

Les exemples suivants illustrent la présente invention sans toutefois en limiter la portée.

## Exemple 1 :

## Préparation - d'un catalyseur d'hydrocraquage C1 (conforme à l'invention) contenant une zéolithe ZBM-30 et une zéolithe Y

## - et d'un catalyseur C2 (non conforme à l'invention) contenant la seule zéolithe Y

La zéolithe ZBM-30 est synthétisée selon le brevet BASF EP-A-46504 avec le structurant organique triéthylènetétramine. Puis elle est soumise à une calcination à 550 °C sous flux d'air sec durant 12 heures. La zéolithe H-ZBM-30 (forme acide) ainsi obtenue possède un rapport Si/Al de 45 et un rapport Na/Al inférieur à 0,001.

Un support de catalyseur d'hydrocraquage contenant la zéolithe ZBM-30 calcinée est préparé de la façon suivante :

On mélange 60 g de la zéolithe H-ZBM-30 décrite ci-dessus, à 40 g d'une matrice composée de boehmite tabulaire ultrafine ou gel d'alumine commercialisée sous le nom SB3 par la société Condéa Chemie Gmbh. Ce mélange de poudre a été ensuite mélangé à une solution aqueuse contenant de l'acide nitrique à 66 % (7 % poids d'acide par gramme de gel sec) puis malaxé pendant 15 minutes. A l'issue de ce malaxage, la pâte obtenue est passée à travers une filière ayant des orifices cylindriques de diamètre égal à 1,4 mm. Les extrudés sont ensuite séchés une nuit à 120 °C sous air puis calcinés à 550 °C sous air.

La zéolithe ZBM-30 est utilisée pour préparer le catalyseur C1. La zéolithe Y entrant dans la composition des catalyseurs C1 et C2 présente un paramètre de maille de 24,29 Å, un rapport Si/Al, mesuré par fluorescence X de 18.2 et une surface spécifique de 815 m2/g.

Un support de catalyseur d'hydrocraquage contenant les zéolithes ZBM-30 calcinée et Y est préparé de la façon suivante :

On mélange 10 g de la zéolithe H-ZBM-30 et 15 g de zéolithe Y décrites ci-dessus, à 75 g d'une matrice composée de boehmite tabulaire ultrafine ou gel d'alumine commercialisée sous le nom SB3 par la société Condéa Chemie Gmbh. Ce mélange de poudre a été ensuite mélangé à une solution aqueuse contenant de l'acide nitrique à 66 % (7 % poids d'acide par gramme de gel sec) puis malaxé pendant 15 minutes. A l'issue de ce malaxage, la pâte obtenue est passée à travers une filière ayant des orifices cylindriques de diamètre égal à 1,4 mm. Les extrudés sont ensuite séchés une nuit à 120 °C sous air puis calcinés à 550 °C sous air.

Ce support est ensuite imprégné à sec par une solution aqueuse d'un mélange d'heptamolybdate d'ammonium, de nitrate de nickel et d'acide orthophosphorique, séché une nuit à 120 °C sous air et enfin calciné sous air à 550 °C. Les teneurs pondérales en oxydes du catalyseur C1 ainsi obtenu sont de 3,0 % de NiO, 14,0 % de MoO₃ et 4,6 % de P₂O₅.

Un autre support est préparé en mélangeant 15 g de zéolithe Y décrites ci-dessus, à 85 g d'une matrice composée de boehmite tabulaire ultrafine ou gel d'alumine commercialisée sous le nom SB3 par la société Condéa Chemie Gmbh. Ce mélange de poudre a été ensuite mélangé à une solution aqueuse contenant de l'acide nitrique à 66 % (7 % poids d'acide par gramme de gel sec) puis malaxé pendant 15 minutes. A l'issue de ce malaxage, la pâte obtenue est passée à travers une filière ayant des orifices cylindriques de diamètre égal à 1,4 mm. Les extrudés sont ensuite séchés une nuit à 120 °C sous air puis calcinés à 550 °C sous air.

Ce support est ensuite imprégné à sec par une solution aqueuse d'un mélange d'heptamolybdate d'ammonium, de nitrate de nickel et d'acide orthophosphorique, séché une nuit à 120°C sous air et enfin calciné sous air à 550 °C. Les teneurs pondérales en oxydes du catalyseur C2 ainsi obtenu sont de 2,9 % de NiO, 14,1 % de $MoO_3$ et 4,3 % de $P_2O_5$.

## Exemple 2

### Evaluation des catalyseurs C1 et C2 en hydrocraquage d'un gazole sous vide

Les catalyseurs C1 et C2 sont évalués en hydrocraquage d'un gazole sous vide dans les conditions de l'hydrocraquage à conversion élevée (60-100%). La charge pétrolière est un distillat sous vide hydrotraité dont les principales caractéristiques sont les suivantes :

- Densité (20/4)          0,8410
- Soufre (ppm poids)          15
- Azote (ppm poids)          5
- Distillation simulée :

  - Point initial          180 °C
  - Point 10 % %          275 °C
  - Point 50 % %          443 °C
  - Point 90 % %          537 °C
  - Point final          611 °C

Cette charge a été obtenue par hydrotraitement d'un distillat sous vide sur un catalyseur HR448 vendu par la société AXENS comprenant un élément du groupe VIB et un élément du groupe VIII déposés sur alumine.

On ajoute à la charge hydrotraitée un composé soufré précurseur de $H_2S$ et un composé azoté précurseur de $NH_3$ afin de simuler les pressions partielles d'$H_2S$ et d'$NH_3$ présente dans la deuxième étape d'hydrocraquage. La charge est ainsi additivée de 2,5 % de soufre et de 1400 ppm d'azote. La charge ainsi préparée est injectée dans l'unité de test d'hydrocraquage qui comprend un réacteur en lit fixe, à circulation ascendante de la charge ("up-flow"), dans lequel ont été introduits 50 ml de catalyseur C1 ou C2. Avant injection de la charge, le catalyseur est sulfuré par un mélange gazole + DMDS + aniline jusqu'à 320 °C. Notons que toute méthode de sulfuration in-situ ou ex-situ est convenable. Une fois la sulfuration réalisée, la charge décrite ci-dessus peut être transformée. Les conditions opératoires de l'unité de test sont les suivantes :

- Pression totale          149 MPa
- Catalyseur          5080 $cm^3$
- Température          360-420 °C
- Débit d'hydrogène          580 l/h
- Débit de charge          5080 $cm^3$/h

Les performances catalytiques sont exprimées par la température qui permet d'atteindre un niveau de conversion brute de 70 % et par la sélectivité brute en distillats moyen 150-380 °C. Ces performances catalytiques sont mesurées sur le catalyseur après qu'une période de stabilisation, généralement au moins 48 heures, ait été respectée.

La conversion brute CB est prise égale à :

$$CB = \%\ poids\ de\ 380\ °C^-\ de\ l'effluent$$

La sélectivité brute SB en distillat moyen est prise égale à :

$$SB = 100 \times \frac{\text{poids de la fraction (150 - 380 °C) de l'effluent}}{\text{poids de la fraction 380 °C}^- \text{ de l'effluent}}$$

Les distillats moyens obtenus sont composés de produits ayant un point d'ébullition compris entre 150 et 380 °C.

Dans le Tableau 3 qui suit, on a reporté la température de réaction et la sélectivité brute pour les catalyseurs C1 et C2, ainsi que les valeurs des indices de viscosité déterminées sur les fractions 380°C+ après déparaffinage au solvant.

Le Tableau 3 met en évidence que l'utilisation du catalyseur C1 selon l'invention contenant de la ZBM-30 et de la zéolithe Y conduit à une sélectivité brute en distillat moyen plus élevée que le catalyseur C2 non conforme à l'invention.

En outre, il apparaît clairement que les indices de viscosité des fractions 380°C$^+$ obtenues avec les catalyseurs selon l'invention sont améliorés.

**Tableau 3 : Activités catalytiques des catalyseurs en hydrocraquage haute conversion brute (80 %)**

| Référence | Composition | T(°C) | Sélectivité brute en distillat moyen (150-380 °C) (% poids) | Indice de viscosité VI 380 °C$^+$ mesuré après déparaffinage au solvant (MIBC*) |
|---|---|---|---|---|
| C1 | NiMoP/ZBM-30+Y - Al$_2$O$_3$ | 384 | 67,8 | 123 |
| C2 | NiMoP/Y - Al$_2$O$_3$ | 386 | 65,4 | 118 |
| * MIBC = Méthyl-isobuytlcétone | | | | |

## Revendications

1. Catalyseur comprenant au moins une matrice et au moins un élément hydro-déshydrogénant choisi dans le groupe formé par les éléments du groupe VIII et du groupe VIB, ledit catalyseur étant **caractérisé en ce qu'**il contient au moins une zéolithe choisie dans le groupe formé par les zéolithes ZBM-30, synthétisée en présence de triéthylène-tétramine et ZSM-48, et au moins une zéolithe Y.

2. Catalyseur selon la revendication 1 dans lequel la zéolithe est une zéolithe ZBM-30.

3. Catalyseur selon l'une des revendications 1 à 2 dans lequel la zéolithe Y est partiellement amorphe.

4. Catalyseur selon l'une des revendications 1 à 3 qui renferme au moins une matrice minérale poreuse amorphe ou mal cristallisée de type oxyde.

5. Catalyseur selon l'une des revendications 1 à 4 qui renferme au moins un élément dopant choisi dans le groupe formé par le bore, le silicium et le phosphore.

6. Catalyseur selon l'une des revendications 1 à 5 qui renferme au moins un élément du groupe VIIA.

7. Catalyseur selon l'une des revendications 1 à 6 qui renferme au moins un élément du groupe VIIB.

8. Catalyseur selon l'une des revendications 1 à 7 qui renferme en % poids par rapport à la masse totale du catalyseur :

   - 0,1 à 60% d'au moins un métal hydro-déshydrogénant choisi dans le groupe formé par les métaux du groupe VIB et du groupe VIII,
   - 1 à 99 % d'au moins une matrice minérale poreuse amorphe ou mal cristallisée de type oxyde
   - 0,1 à 99 % d'au moins une zéolithe choisie dans le groupe formé par les zéolithes ZBM-30 synthétisée en présence de triéthylène-tétramine et ZSM-48,
   - 0 à 20% d'au moins un élément promoteur choisi dans le groupe formé par le silicium, le bore et le phosphore,
   - 0 à 20% d'au moins un élément choisi dans le groupe VIIA
   - 0 à 20% d'au moins un élément choisi dans le groupe VIIB

- 0,1 à 40% poids d'une zéolithe Y.

**9.** Procédé d'hydroconversion/hydrocraquage de charges hydrocarbonées utilisant le catalyseur selon l'une des revendications 1 à 8.

**10.** Procédé d'hydroconversion/hydrocraquage selon la revendication 9 effectué en une étape.

**11.** Procédé d'hydroconversion/hydrocraquage selon la revendication 9 effectué en deux étapes.

**12.** Procédé d'hydroconversion/hydrocraquage selon l'une des revendications 10 ou 11 réalisé dans des conditions de pression supérieures à 5 MPa et conduisant à une conversion supérieure à 55%.

**13.** Procédé d'hydroconversion/hydrocraquage selon l'une des revendications 10 ou 11 réalisé dans des conditions de pression comprises entre 2 et 12 MPa et conduisant à une conversion inférieure à 55 %.

**14.** Procédé d'hydroconversion/hydrocraquage selon l'une des revendications 9 à 13 dans lequel les charges employées sont des essences, des kérosènes, des gas-oils, des gas-oils sous vide, des résidus atmosphériques, des résidus sous vide, des distillats atmosphériques, des distillats sous vide, des fuels lourds, des huiles, des cires et des paraffines, des huiles usagées, des résidus ou des bruts désasphaltés, des charges provenant des procédés de conversions thermiques ou catalytiques et leurs mélanges

**Claims**

**1.** Catalyst comprising at least one matrix and at least one hydro-dehydrogenating element chosen from the group formed by the elements of Group VIII and Group VIB, said catalyst being **characterized in that** it contains at least one zeolite chosen from the group formed by the zeolites ZBM-30, synthesized in the presence of triethylenetetramine, ZSM-48, and at least one Y zeolite.

**2.** Catalyst according to claim 1 in which the zeolite is a ZBM-30 zeolite.

**3.** Catalyst according to one of claims 1 to 2 in which the Y zeolite is partially amorphous.

**4.** Catalyst according to one of claims 1 to 3 which contains at least one amorphous or poorly crystallized oxide-type porous mineral matrix.

**5.** Catalyst according to one or claims 1 to 4 which contains at least one doping element chosen from the group formed by boron, silicon and phosphorus.

**6.** Catalyst according to one of claims 1 to 5 which contains at least one element of Group VIIA.

**7.** Catalyst according to one of claims 1 to 6 which contains at least one element of Group VIIB.

**8.** Catalyst according to one of claims 1 to 7 which contains in % by weight relative to the total mass of the catalyst:

- 0.1 to 60% of at least one hydro-dehydrogenating metal chosen from the group formed by the metals of Group VIB and Group VIII,
- 1 to 99% of at least one amorphous or poorly crystallized oxide-type porous mineral matrix,
- 0.1 to 99% of at least one zeolite chosen from the group formed by the zeolites ZBM-30, ZSM-48, EU-2 and EU-11,
- 0 to 20% of at least one promoter element chosen from the group formed by silicon, boron and phosphorus,
- 0 to 20% of at least one element chosen from Group VIIA,
- 0 to 20% of at least one element chosen from Group VIIB,
- 0.1 to 40% by weight of a Y zeolite.

**9.** Process for hydroconversion/hydrocracking of hydrocarbon charges using the catalyst according to one of claims 1 to 8.

**10.** Hydroconversion/hydrocracking process according to claim 9 carried out in one stage.

**11.** Hydroconversion/hydrocracking process according to claim 9 carried out in two stages.

**12.** Hydroconversion/hydrocracking process according to one of claims 10 or 11 carried out under conditions of pressure greater than 5 MPa and leading to a conversion greater than 55%.

**13.** Hydroconversion/hydrocracking process according to one of claims 10 or 11 carried out under conditions of pressure comprised between 2 and 12 MPa and leading to a conversion less than 55%.

**14.** Hydroconversion/hydrocracking process according to one of claims 9 to 13 in which the charges used are gasolines, kerosincs, gasoils, vacuum gasoils, long residues, vacuum residues, atmospheric distillates, heavy fuels, oils, waxes and paraffins, used oils, deasphalted residues or crudes, charges resulting from thermal or catalytic conversion processes and their mixtures.

**Patentansprüche**

**1.** Katalysator, der mindestens eine Matrix und mindestens ein hydrodehydrierendes Element umfasst, ausgewählt aus der Gruppe gebildet aus den Elementen der Gruppe VIII und der Gruppe VIB, wobei der Katalysator **dadurch gekennzeichnet ist, dass** er mindestens einen Zeolithen, ausgewählt aus der Gruppe gebildet aus den Zeolithen ZBM-30, synthetisiert in Gegenwart von Triethylentetramin und ZSM-48, und mindestens einen Zeolithen Y enthält.

**2.** Katalysator nach Anspruch 1, wobei der Zeolith ein Zeolith ZBM-30 ist.

**3.** Katalysator nach einem der Ansprüche 1 bis 2, bei dem der Zeolith Y teilweise amorph ist.

**4.** Katalysator nach einem der Ansprüche 1 bis 3, der mindestens eine amorphe oder schlecht kristallisierte poröse Mineralmatrix vom Typ Oxid beinhaltet.

**5.** Katalysator nach einem der Ansprüche 1 bis 4, der mindestens ein dotierendes Element beinhaltet, ausgewählt aus der Gruppe gebildet aus Bor, Silicium und Phosphor.

**6.** Katalysator nach einem der Ansprüche 1 bis 5, der mindestens ein Element der Gruppe VIIA beinhaltet.

**7.** Katalysator nach einem der Ansprüche 1 bis 6, der mindestens ein Element der Gruppe VIIB beinhaltet.

**8.** Katalysator nach einem der Ansprüche 1 bis 7, der, in Gew.-% bezogen auf die Gesamtmasse des Katalysators, Folgendes beinhaltet:

- 0,1 bis 60% mindestens eines hydro-dehydrierenden Metalls, ausgewählt aus der Gruppe gebildet aus den Metallen der Gruppe VIB und der Gruppe VIII,
- 1 bis 99 % mindestens einer amorphen oder schlecht kristallisierten porösen Mineralmatrix vom Typ Oxid,
- 0,1 bis 99 % mindestens eines Zeolithen, ausgewählt aus der Gruppe gebildet aus den Zeolithen ZBM-30, synthetisiert in Gegenwart von Triethylentetramin und ZSM-48.
- 0 bis 20 % mindestens eines Promoterelements, ausgewählt aus der Gruppe gebildet aus Silicium, Bor und Phosphor,
- 0 bis 20 % mindestens eines Elements, ausgewählt aus der Gruppe VIIA,
- 0 bis 20 % mindestens eines Elements, ausgewählt aus der Gruppe VIIB,
- 0,1 bis 40 Gew.-% eines Zeolithen Y.

**9.** Verfahren zur/zum Hydrokonversion/Hydrokracken von Kohlenwasserstoffbeschickungen, bei dem der Katalysator nach einem der Ansprüche 1 bis 8 verwendet wird.

**10.** Verfahren zur/zum Hydrokonversion/Hydrokracken nach Anspruch 9, das in einem Schritt durchgeführt wird.

**11.** Verfahren zur/zum Hydrokonversion/Hydrokracken nach Anspruch 9, das in zwei Schritten durchgeführt wird.

**12.** Verfahren zur/zum Hydrokonversion/Hydrokracken nach einem der Ansprüche 10 oder 11, das unter Druckbedingungen von mehr als 5 MPa ausgeführt wird und zu einer Konversion von mehr als 55 % führt.

**13.** Verfahren zur/zum Hydrokonversion/Hydrokracken nach einem der Ansprüche 10 oder 11, das unter Druckbedingungen im Bereich zwischen 2 und 12 MPa ausgeführt wird und zu einer Konversion von weniger als 55 % führt.

**14.** Verfahren zur/zum Hydrokonversion/Hydrokracken nach einem der Ansprüche 9 bis 13, wobei die benutzten Beschickungen Benzine, Kerosine, Gasöle, Vakuumgasöle, atmosphärische Rückstände, Vakuumrückstände, atmosphärische Destillate, Vakuumdestilllate, schwere Heizöle, Öle, Wachse und Paraffine, Altöle, entasphaltierte Rückstände oder Rohöle, Beschickungen, die aus thermischen oder katalytischen Konversionsverfahren stammen, oder deren Gemische sind.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2754742 A
- FR 2754826 A
- US 4857170 A
- GB 2077709 A
- US 4741891 A
- US 4836996 A
- US 4876412 A
- US 5098685 A
- EP 23089 A
- US 4397827 A
- EP 15132 A
- EP 142317 A
- US 5961591 A
- EP 46504 A
- US 5525209 A

**Littérature non-brevet citée dans la description**

- **Brunauer ; Emmett ; Teller.** *J. Am. Chem. Soc.,* 1938, vol. 60, 309-316